# EUROPEAN PATENT SPECIFICATION

(11) **EP 2 098 908 B1**
(45) Date of publication and mention of the grant of the patent: **30.05.2012**
(21) Application number: 09154387.6
(22) Date of filing: 05.03.2009
(51) Int. Cl.: G02F 1/167, G02F 1/1333

(54) **Non-volatile display apparatus**
Nichtflüchtige Anzeigevorrichtung
Appareil d'affichage non volatile

(30) Priority: 06.03.2008 TW 97107896
(43) Date of publication of application: 09.09.2009
(73) Proprietor: Pervasive Display Co. Ltd., Tainan City 717 (TW)
(72) Inventor: Sah, Wen-Jyh, Tainan City 700 (TW)
(74) Representative: 2K Patentanwälte Blasberg Kewitz & Reichel

(56) References cited:
- JP-A- 2003 345 260
- JP-A- 2005 242 148
- US-A1- 2004 027 327

## Description

### BACKGROUND OF THE INVENTION

### FIELD OF INVENTION

the present invention relates to a non-volatile display apparatus.

### RELATED ART

As the demands for effectively handling and preserving a large number of data increase, the data are mostly processed by computers and the images are presented by the flat panel display apparatuses. However, since the size and weight of the conventional flat panel display apparatus are not more advantageous compared to the paper prints that are easy to read and carry, an electrophoretic display apparatus (EPD), using an electrophoretic material, is produced with the advantages of paper prints and benefits of electronic products such as data processing and environmental protection.

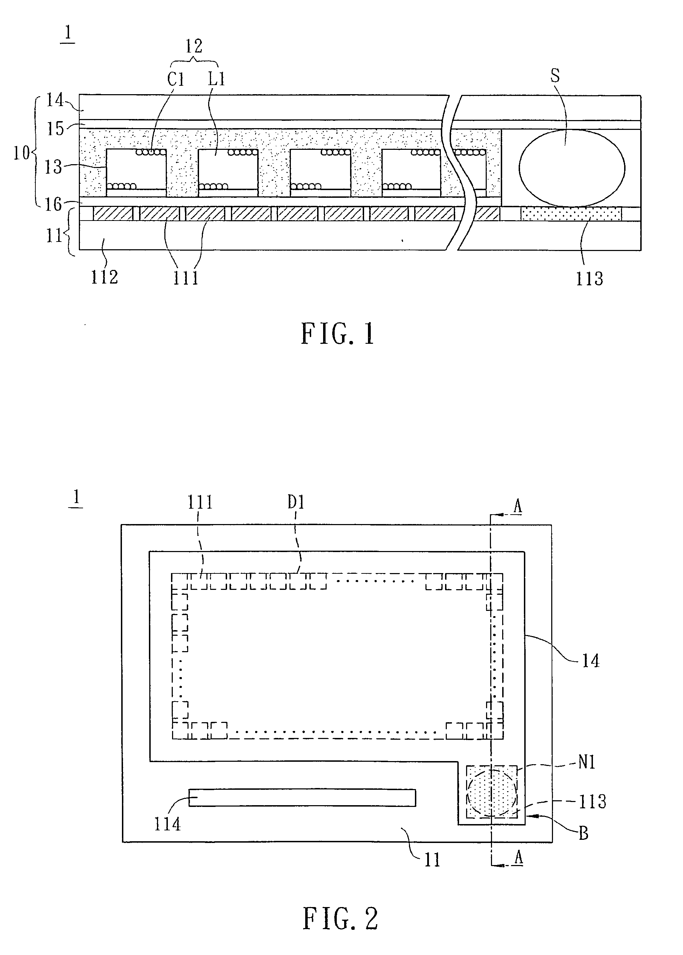

A conventional electrophoretic display apparatus 1 is illustrated in FIGS. 1 and 2. FIG. 1 is a cross-sectional view along a line A-A in FIG. 2 and FIG. 2 is a schematic top view of the electrophoretic display apparatus 1.

With reference to FIGS. 1 and 2, the electrophoretic display apparatus 1 includes a driving substrate 11 and an electrophoretic display material 12. The driving substrate 11 is a TFT (thin film transistor) substrate having a plurality of pixel electrodes 111 and a lower substrate 112. An electrophoretic display material 12 is disposed on a side of the driving substrate 11 and includes a plurality of electric particles C1 and a dielectric solution L1. The electrophoretic material 12 is contained in a plurality of micro-cups 13. Moreover, the electrophoretic display apparatus 1 further includes an upper substrate 14, a common electrode layer 15 and an adhesive layer 16. The electrophoretic display material 12 is sealed between the common electrode layer 15 and the driving substrate 11 and driven by the electric field formed by the common electrode layer 15 and the pixel electrode 111.

Because the signal of the common electrode layer 15 comes from a control chip 114 or a control circuit connected to the driving substrate 11, a connecting pad 113 is disposed on the driving substrate 11 while assembling, so as to electrically connect the common electrode layer 15 with the connecting pad 113 by a conductive gel S, such that a common voltage signal is transmitted to the common electrode layer 15 from the driving substrate 11.

The pixel electrodes 111 form a rectangular area and correspond to a display surface D1 (e.g. the large dotted-line rectangle as shown in FIG. 2), i.e. an effective display area. In order to electrically connect the common electrode layer 15 and the driving substrate 11 in FIG. 1, the connecting pad 113 is disposed outside the display surface D1 of the driving substrate 11. The connecting pad 113 is disposed on the lower substrate 112 and the electrophoretic display material 12 corresponding to the connecting pad 113 has to be removed. After that, the common electrode layer 15 and the connecting pad 113 are electrically connected via the conductive gel S. The part where the connecting pad 113 is disposed cannot present the effective pixels to the user since there is no pixel electrode 111 and electrophoretic display material 12; hence it is a non-effective area N1. In conventional art, the non-effective display area N1 exists in the part that the upper substrate 14 corresponds to the connecting pad 113. Thus, in the top view, the shape of the upper substrate 14 is a rectangle with a protruding part B, which means, the upper substrate 14 is a concavo polygon (i.e. the polygon with an inner angle larger than 180 degrees).

The above-described electrophoretic display material 12, micro-cups 13, upper substrate 14 and common electrode layer 15 together may be referred to as an electrophoretic display film 10. In general, the electrophoretic display film 10 is manufactured by upstream manufacturers, and the driving substrate 11 and the electrophoretic display film 10 are then assembled by downstream manufacturers or system manufacturers. The product can be applied in various display apparatuses, for example, an electronic book, an advertising panel, or a price tag.

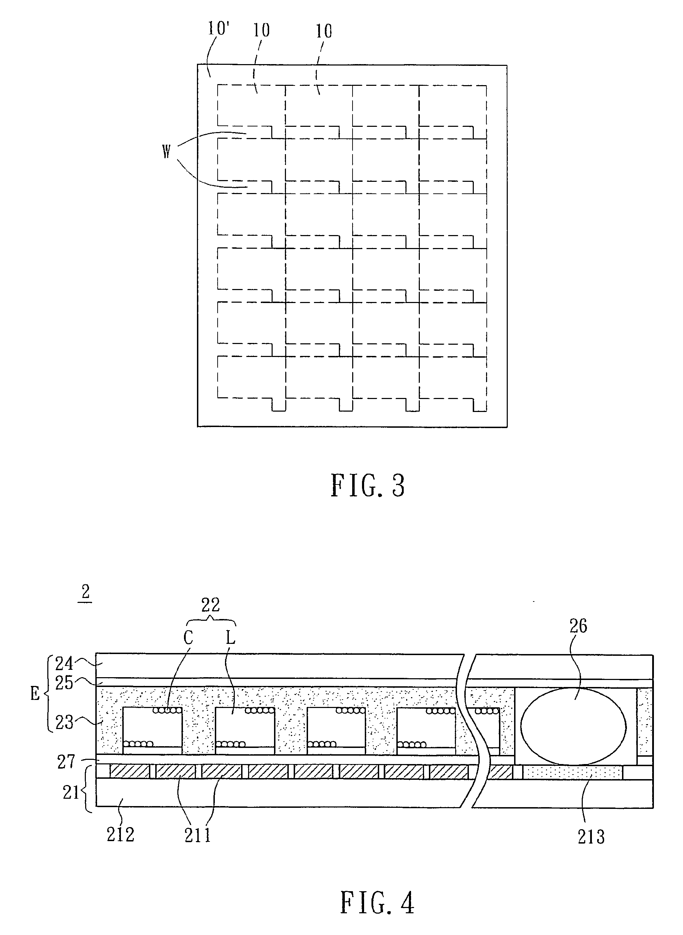

As shown in FIG. 3, as the assembly manufacturer processes the cutting step to the large-area electrophoretic display films 10', each of electrophoretic display films 10 is a concavo polygon rather than rectangle, therefore numerous waste parts W are left. This reduces cutting utility and increases the material, cost. Moreover, has the size of the electrophoretic display apparatus 1 (e.g. the cell phone or PDA) becomes smaller, the ratio of the waste parts is higher.
From JP 2005 242148 A there is known a non-volatile display apparatus (see Fig. 9) comprising a driving substrate having a connecting pad and a plurality of pixel electrodes, wherein the pixels electrodes form a rectangular area and thus are distributed in X columns and Y rows. The apparatus further comprises a non-volatile display material disposed on one side of the driving substrate (see element 11 in Fig 4), wherein the X columns and the Y rows form the rectangular area and the connecting pad (see element 13 in Fig. 4) is at least partially disposed in the rectangular area. This known non-volatile display apparatus, however, needs to be improved in order to enhance the cutting utility.

### SUMMARY OF THE INVENTION

In view of the foregoing, the present invention is to provide a non-volatile display apparatus that can enhance the cutting utility.

To achieve the above, a non-volatile display apparatus according to claim 1 is provided.
Preferably the profile of a distribution area of the pixel electrodes is concave polygonal.

As mentioned above, a non-volatile display apparatus according to the present invention is to dispose the connecting pad in the pixel electrodes-distributed rectangular area formed by the X columns and Y rows, such that a protruding part does not have to be reserved when cutting the non-volatile display film and the waste parts will not be produced, so as to greatly enhance the cutting utility and cutting speed, hence reduce the material cost.

### BRIEF DESCRIPTION OF THE DRAWINGS

The invention will become more fully understood from the detailed description and accompanying drawings, which are given for illustration only, and thus are not limitative of the present invention, and wherein:

FIG. 1 is a cross-sectional view of a conventional electrophoretic display apparatus;

FIG. 2 is a top view of the electrophoretic display apparatus in FIG. 1;

FIG. 3 is a schematic view of a conventional large-area electrophoretic display film cut into a plurality of electrophoretic display films;

FIG. 4 is a cross-sectional view of a non-volatile display apparatus according to a first embodiment of the present invention;

FIG. 5 is a top view of the non-volatile display apparatus according to the first embodiment of the present invention;

FIG. 6 is a schematic view of a large-area non-volatile display film cut into a plurality of non-volatile display films in FIG. 5;

FIG. 7 is a top view of a non-volatile display apparatus having a frame according to the first embodiment of the present invention;

FIGS. 8A to 8C are schematic views of connecting pads in various aspects of a non-volatile display apparatus according to a second embodiment of the present invention; and

FIG. 8D is a schematic view of the non-volatile display apparatus in yet another various aspect according to the second embodiment of the present invention, wherein the frame covers a non-effective display area.

### DETAILED DESCRIPTION OF THE INVENTION

The present invention will be apparent from the following detailed description, which proceeds with reference to the accompanying drawings, wherein the same references relate to the same elements.

To further understand the technical features of the present invention, the technical terms of the present invention will be defined as follows.

A non-volatile display apparatus is a display apparatus with bi-stable states or multi-stable states. The non-volatile display apparatus may still maintain in one of the stable states for at least several hundreds milliseconds without power supply so to save a great amount of power. The non-volatile display apparatus has a non-volatile display material, for example, an electrophoretic material, an electromagnetic phoretic material, a liquid powder, a charged particle, an electro-chromatic material, an electrolysis material, twist balls (or rotating balls), or a cholesteric liquid crystal.

The present invention will be apparent from the following detailed description, which proceeds with reference to the accompanying drawings, wherein the same references relate to the same elements.

FIG. 4 is a cross-sectional view of a non-volatile display apparatus according to a first embodiment of the present invention. As shown in FIG. 4, the non-volatile display apparatus 2 includes a driving substrate 21 and a non-volatile display material 22.

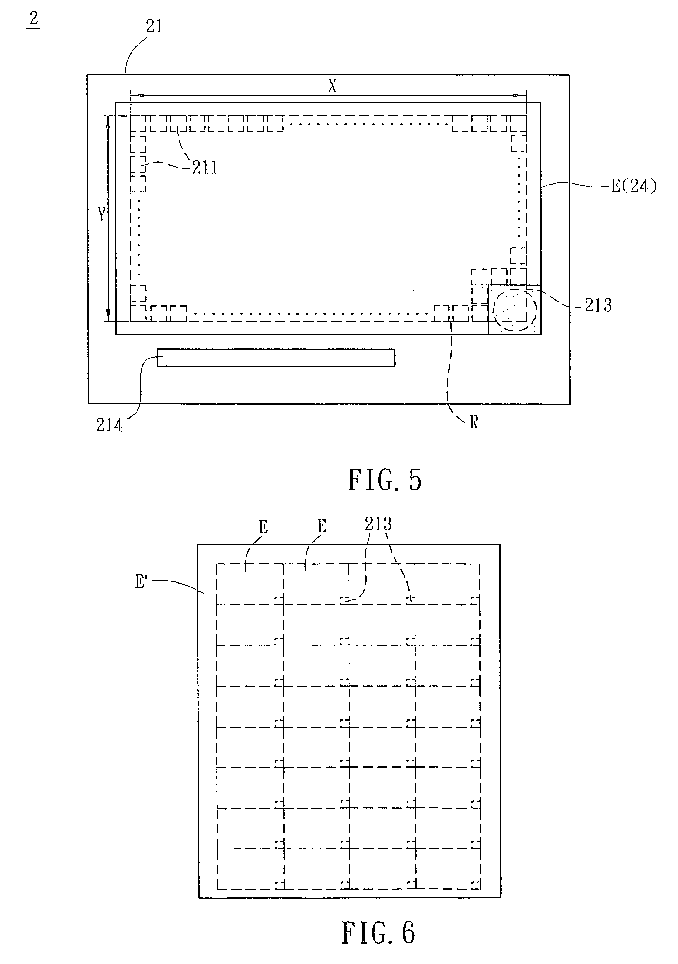

The driving substrate 21 has a plurality of pixel electrodes 211, a lower substrate 212, and a connecting pad 213. The material of the lower substrate 212 may be resin, ceramics, or glass. The pixel electrodes 211 are disposed on the lower substrate 212. A control chip 214 (as shown in FIG. 5) or a control circuit disposed on the lower substrate 212 is used to drive the non-volatile display material 22 with the pixel electrodes 211, and the driving substrate 21 can be driven by an active matrix driving method or a passive matrix driving method. In the embodiment, the driving substrate 21 is driven by the active matrix driving method for example. In addition, the connecting pad 213 is disposed on the side of the driving substrate 21 facing the non-volatile display material 22. For example, the connecting pad 213 is disposed on a side of the lower substrate 212 facing the non-volatile display material 22.

The non-volatile display material 22 is disposed on a side of the driving substrate 21. The non-volatile display material 22 may be an electrophoretic material, for example, a plurality of charged particles C and a dielectric solution L. In the embodiment, the non-volatile display apparatus 2 further includes an accommodating structure 23, which may include a plurality of micro-cups or a plurality of microcapsules. The accommodating structure 23 in the embodiment has a plurality of micro-cups for example. The charged particles C are suspended in the dielectric solution L, and the charged particles C and the dielectric solution L are both accommodated in the micro-cups.

In addition, the non-volatile display apparatus 2 further includes an upper substrate 24 and a non-volatile display material 22 is disposed between the upper substrate 24 and the driving substrate 21. The upper substrate 24 may be flexible or inflexible. The material of the upper substrate 24 may be resin, ceramics, or glass, and may or may not be the same as that of the lower substrate 21.

In the embodiment, the non-volatile display apparatus 2 further includes a common electrode layer 25 that is transparent. The common electrode layer 25 is disposed opposite to the pixel electrodes 211 of the driving substrate 21 and between the non-volatile display material 22 and the upper substrate 24. As a voltage difference is applied between the common electrode layer 25 and at least one pixel electrode 211, the charged particle C is forced to move, such that the ambient light is reflected to present the color of the charged particle C or of the dielectric solution L. The material of the common electrode layer 25 can be, for example, indium tin oxide (ITO), indium zinc oxide (IZO), aluminum-doped zinc oxide (AZO), gallium-doped zinc oxide (GZO), or zinc oxide (ZnO).

The non-volatile display apparatus 2 further includes a conductive element 26 that is connected to the connecting pad 213 and the common electrode layer 25, such that the common electrode layer 25 is electrically connected to the connecting pad 213. The conductive element 26 may be a conductive spacer (e.g. a gold ball), a conductive gel (e.g. a silver gel), a conductive adhesive tape or a wire. The conductive element 26 in the embodiment is a gold ball for example. To dispose the conductive element 26, the non-volatile display material 22 has to be partially removed so as to connect the conductive element 26 with the connecting pad 213 and the common electrode layer 25. In the embodiment, the partial non-volatile display apparatus 2 and the accommodating structure 23 are removed by laser. However, the accommodating structure 23 still remains outside the conductive element 26 to maintain the mechanical intensity. It is noted that the connecting pad 213 in the embodiment is disposed on the side of the driving substrate 21 facing the non-volatile display material 22.

In addition, the non-volatile display apparatus 2 may further includes an adhesive layer 27. In the embodiment, the driving substrate 21 can be adhered to the accommodating structure 23 accommodating the non-volatile display material 22 by the adhesive layer 27.

FIG. 5 is a top view of the non-volatile display apparatus 2 in FIG. 4. With reference to FIG. 5, the area of the driving substrate 21 is larger than that of the upper substrate 24 because a control chip 214 or a control circuit (not shown) has to be disposed on the driving substrate 21. Additionally, the upper substrate 24 is a convex polygon, in which each inner angle is smaller than 180 degrees. On the contrary, a concavo polygon has at least one inner angle larger than 180 degrees. The convex polygon is, for example, a rectangle, a square, or a regular polygon. In the embodiment, the upper substrate 24 is a rectangle for example.

In the embodiment, the pixel electrodes 211 are distributed in the X columns and Y rows and form a rectangular area R. At least partial connecting pad 213 is disposed in the rectangular area R. At least a part of the connecting pad 213 is located in the rectangular area R, and the connecting pad 213 is disposed in a corner of the rectangular area R for example. The shape of the connecting pad 213 is not limited, and it may be rectangular (as shown in FIG. 5), round, or in irregular shape. Furthermore, the profile of the distribution area of the pixel electrodes 211 is concavo polygonal, which means, if the adjacent pixel electrodes 211 on the periphery of the distribution area of the pixel electrodes 211 are connected, a concavo polygon is formed because the connecting pad 213 is disposed in the partial rectangular area R.

With reference to FIGS. 5 and 6, in the embodiment, the non-volatile display film E that includes the non-volatile display material 23, upper substrate 24 and common electrode 25 is cut from a large-area non-volatile display film E'. The area of the large-area non-volatile display film E' in the present invention is the same size as the area of the conventional large-area electrophoretic display material. Since the connecting pad 213 is formed by sacrificing partial area of the rectangular area R, the non-volatile display film E, i.e. the upper substrate 24, is rectangular. Thus, the cutting speed is enhanced while the cutting step is processed so as to save the manufacturing time. Besides, the material cost is reduced by cutting a greater number of the non-volatile display films E in the same area.

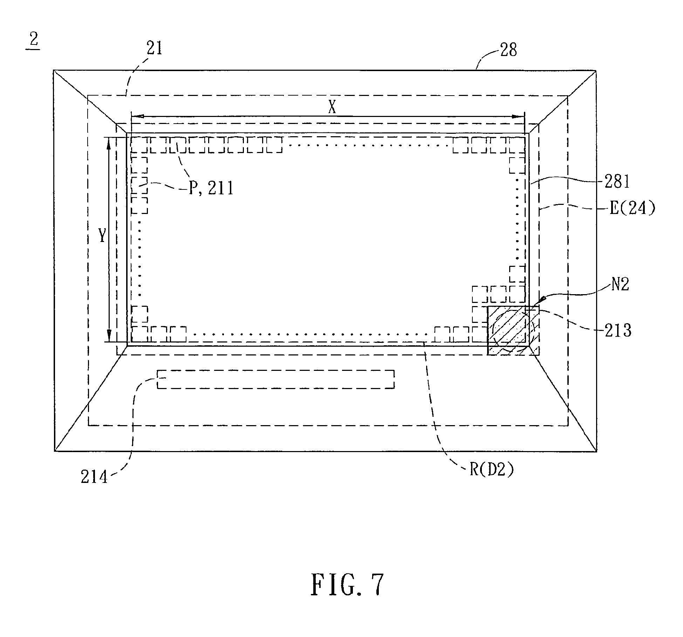

As shown in FIG. 7, the non-volatile display apparatus 2 may further include a frame 28, which covers the periphery of the driving substrate 21 and has an opening 281. The rectangular area R corresponds to a display surface D2 and at least part of the display surface D2 is exposed from the opening 281. In the embodiment, the size of the rectangular area R is the same as that of the display surface D2 and the opening 281 is approximately larger than the display surface D2. The display surface 2 is exposed from the opening 281, so the user can see the displayed image on the display surface 2.

The part of the driving substrate 21 on which the connecting pad 213 is disposed does not have the pixel electrode 211 and the non-volatile display material 23, therefore the user observes a non-effective display area N2 on the display surface D2 that corresponds to the connecting pad 213. The non-effective display area N2 is shown as the oblique-line part in FIG. 7, and the size of the non-effective display area N2 in FIG. 7 is bigger than the actual size for illustration only. The image in the non-effective display area N2 will not change with the variation of the driving signal. Moreover, the display surface D2 has a plurality of pixels P (i.e. the positions of the pixel electrodes 211 in the embodiment) that are distributed within the X columns and Y rows. Since the non-effective display area N2 is formed, the number of the pixels (the effective display pixels) is smaller than the product of X and Y. In addition, the connecting pad 213 is disposed in the corner of the rectangular area R; hence the user can see the non-effective display area N2 on the display surface D2.

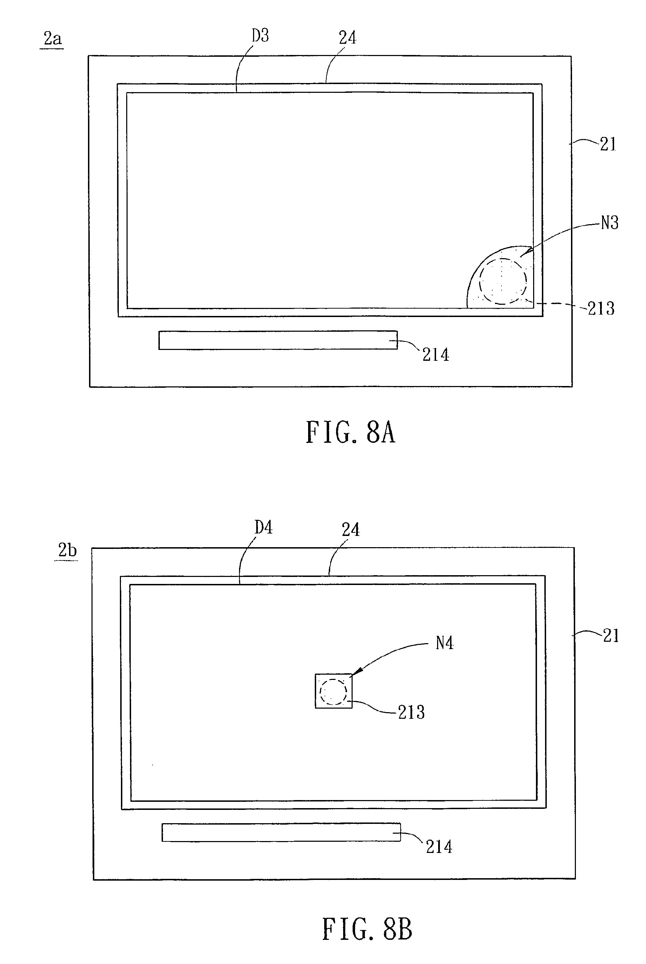

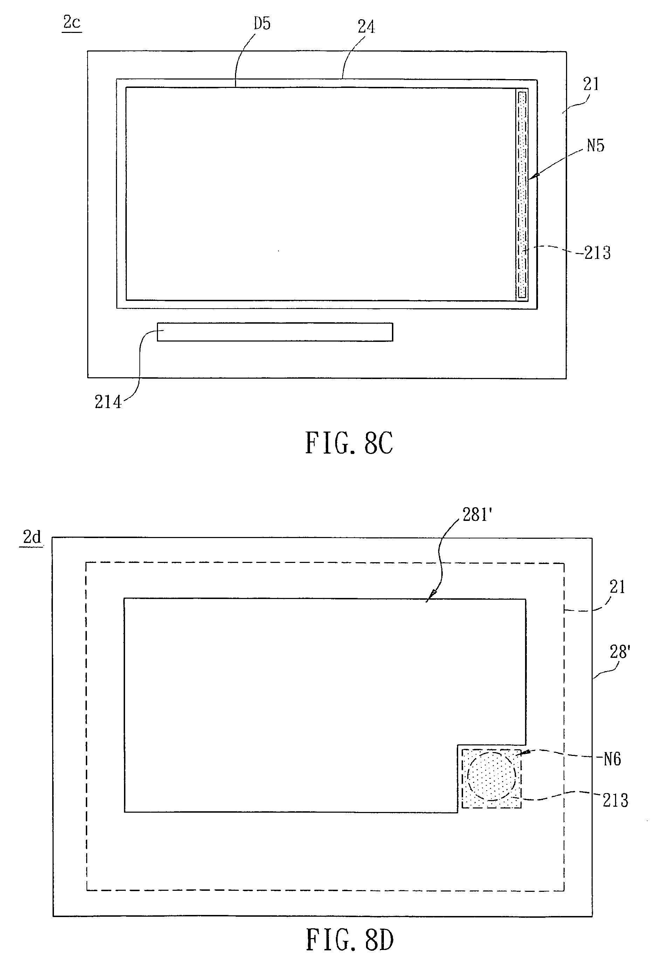

FIGS. 8A to 8D are different aspects of the non-volatile display apparatuses 2a, 2b, 2c, and 2d in the second embodiment of the present invention. Although the frame is not shown in FIGS. 8A to 8C, rectangular circumscriptions are used to indicate the areas of the display surfaces D3, D4, and D5, respectively. The positions of the non-effective display areas N3, N4, and N5 change with the position variation of the connecting pad 213, therefore the non-effective display areas N3, N4, and N5 are located on a side, a corner, and an inside portion of the display surfaces D3, D4, and D5, respectively. The shapes of the non-volatile display areas N3, N4, and N5 are not limited and can be modified according to the demands of manufacturing process. For example, the non-effective display area N3 of the non-volatile display apparatus 2a may have an arc (as shown in FIG. 8A) and is located in a corner of the display surface D3. Alternatively, the non-effective display area N4 of the non-volatile display apparatus 2b may locate inside the display surface D4. Additionally, the non-effective display area N5 of the non-volatile display apparatus 2c is located on a side of the display surface D5.

In addition, the frame in the embodiment can cover the non-effective display area. As shown in FIG. 8D, the non-volatile display apparatus 2d has a frame 28', which has an opening 281' that is a concavo polygon (as shown in FIG. 8D) or in irregular shape, rather than a rectangle (or a convex polygon). A part of the frame 28' is disposed on the projection direction of the connecting pad 213, i.e. the frame 28' has a protruding part that covers at least a part of the connecting pad 213 (e.g. completely covers the connecting pad 213 as shown in FIG. 8D), and blocks the non-effective display area N6, such that as the user view the image through the opening 281', s/he will not see the non-effective display area N6.

In summary there is disclosed a non-volatile display apparatus according to claim 1.

To sum up, a non-volatile display apparatus according to the present invention is to dispose the connecting pad in the pixel electrodes-distributed rectangular area formed by the X columns and Y rows, such that waste parts do not have to be reserved when the non-volatile display film is cut, so as to greatly enhance the cutting utility and cutting speed, hence reduce the material cost.

Although the invention has been described with reference to specific embodiments, this description is not meant to be construed in a limiting sense. Various modifications of the disclosed embodiments, as well as alternative embodiments, will be apparent to persons skilled in the art.

## Claims

1. A non-volatile display apparatus (2), comprising:
a driving substrate (21) having a connecting pad (213) and a plurality of pixel electrodes (211), wherein the pixel electrodes/are distributed in X columns and Y rows;
a non-volatile display film (E) including an upper substrate (24), a non-volatile display material (22) disposed on one side of the driving substrate, wherein the non-volatile display material (22) is disposed between the upper substrate (24) and the driving substrate (21), and
a common electrode layer (25) disposed between the non-volatile display material (22) and the upper substrate (24) and electrically connected to the connecting pad (213),
wherein the X columns and the Y rows form a rectangular area (R) and the connecting pad (213) is at least partially disposed in the rectangular area (R),
**characterized in that**
the connecting pad (213) is disposed on the side of the driving substrate (21) facing the non-volatile display material.

2. The non-volatile display apparatus (2) according to claim 1 , wherein the connecting pad (213) is disposed on a side, a corner, or an inside portion of the rectangular area (R).

3. The non-volatile display apparatus (2) according to one of the preceding claims, wherein the profile of a distribution area of the pixel electrodes (211) is concavo polygonal.

4. The non-volatile display apparatus (2) according to claim 1, wherein the upper substrate (24) is a convex polygon.

5. The non-volatile display apparatus (2) according to claim 1, further comprising:
a conductive element (26) connected to the connecting pad (213) and the common electrode layer (25).

6. The non-volatile display apparatus (2) according to claim 5, wherein the conductive element (26) is a conductive spacer, a conductive gel, a conductive adhesive tape, or a wire.

7. The non-volatile display apparatus (2) according to one of the preceding claims, further comprising:
a frame (28) covering the periphery of the driving substrate (21) and having an opening, wherein the rectangular area (R) has a corresponding display surface and at least a part of the display surface is exposed from the opening.

8. The non-volatile display apparatus (2) according to claim 7, wherein a part of the frame (28) covers at least a part of the connecting pad (213).

9. The non-volatile display apparatus (2) according to claim 7, wherein the display surface has a non-effective display area (N2) and at least a part of the connecting pad (213) is disposed on the non-effective display area (N2).

10. The non-volatile display apparatus (2) according to one of the preceding claims, wherein the rectangular area (R) correspondingly contains a plurality of pixels and the number of the pixels is smaller than the product of X and Y.

## Patentansprüche

1. Nicht-flüchtige Anzeige-Vorrichtung (2), umfassend:
ein Treiber-Substrat (21), das eine Verbindungs-Anschlussfläche (213) und eine Vielzahl von Pixel-Elektroden (211) aufweist, wobei die Pixel-Elektroden (211) in X Spalten und Y Zeilen verteilt sind,
eine nicht-flüchtige Anzeige-Folie (E), die ein oberes Substrat (24) enthält, ein nicht-flüchtiges Anzeige-Material (22), das auf einer Seite des Treiber-Substrats angeordnet ist, wobei das nicht-flüchtige Anzeige-Material (22) zwischen dem oberen Substrat (24) und dem Treiber-Substrat (21) angeordnet ist, und
eine gemeinsame Elektroden-Schicht (25), die zwischen dem nicht-flüchtigen Anzeige-Material (22) und dem oberen Substrat (24) angeordnet und elektrisch mit der Verbindungs-Anschlussfläche (213) verbunden ist,
wobei die X Spalten und die Y Zeilen einen rechteckigen Bereich (R) ausbilden die Verbindungs-Anschlussfläche (213) zumindest teilweise in dem rechteckigen Bereich ( R) angeordnet ist,
**dadurch gekennzeichnet, dass**
die Verbindungs-Anschlussflache (213) auf der Seite des Antriebs-Substrats (21) gegenüber dem nicht-flüchtigen Anzeige-Material angeordnet ist.

2. Nicht-flüchtige Anzeige-Vorrichtung (2) nach Anspruch 1, wobei die Verbindungs-Anschluss fläche (213) auf einer Seite, einer Ecke oder einem Innenbereich des rechteckigen Bereichs ( R) angeordnet ist.

3. Nicht-flüchtige Anzeige-Vorrichtung (2) nach einem der vorhergehenden Ansprüche, wobei das Profil eines Verteilungs-Bereichs der Pixel-Elektroden (211) konkav polygonal ist.

4. Nicht-flüchtige Anzeige-Vorrichtung (2) nach Anspruch 1, wobei das obere Substrat (24) konvex polygonal ist.

5. Nicht-flüchtige Anzeige-Vorrichtung (2) nach Anspruch 1 ferner aufweisend:
ein leitendes Element (26), das mit der Verbindungs-Anschlussfläche (213) und der gemeinsamen Elektroden-Schicht (25) verbunden ist.

6. Nicht-flüchtige Anzeige-Vorrichtung (2) nach Anspruch 5, wobei das leitende Element (26) ein leitender Abstandshalter, ein leitfähiges Gel, ein leitendes Klebeband oder ein Draht ist.

7. Nicht-flüchtige Anzeige-Vorrichtung (2) nach einem der vorhergehenden Ansprüche, ferner aufweisend:
einen Rahmen (28), der die Peripherie des Treiber-Substrats (21) bedeckt und eine Öffnung aufweist, wobei der rechteckige Bereich ( R) eine entsprechende Anzeige-Oberfläche aufweist und mindestens ein Teil der AnzeigeFläche von der Öffnung freigelegt ist.

8. Nicht-flüchtige Anzeige-Vorrichtung (2) nach Anspruch 7, wobei ein Teil des Rahmens (28) zumindest einen Teil der Verbindungs-Anschlussfläche (213) abdeckt.

9. Nicht-flüchtige Anzeige-Vorrichtung (2) nach Anspruch 7, wobei die Anzeige-Oberfläche einen nicht-wirksamen Anzeige-Bereich (N2) aufweist und zumindest ein Teil der Verbindungs-Anschlussfläche (213) auf dem nicht-wirksamen Anzeige-Bereich (N2) angeordnet ist.

10. Nicht-flüchtige Anzeige-Vorrichtung (2) nach einem der vorhergehenden Ansprüche, wobei der rechteckige Bereich ( R) entsprechend eine Vielzahl von Pixeln enthält und die Anzahl der Pixel kleiner als das Produkt aus X und Y ist.

## Revendications

1. Un appareil d'affichage non volatile (2), comprenant:
un substrat de commande (21) ayant un emplacement de connexion (213) et une pluralité d'électrodes de pixels (211), dans lequel les électrodes de pixels (211) sont distribuées dans des colonnes X et dans des lignes Y;
a film d'affichage non volatile (E) comprenant un substrat supérieur (24), un matériau d'affichage non volatile disposé sur un côté du substrat de commande, dans lequel le matériau d'affichage non volatile est disposé entre le substrat supérieur (24) et le substrat de commande (21), et
une couche d'électrode commune (25) disposée entre le matériau d'affichage non volatile (22) et le substrat supérieur (24) et électriquement connecté à l'emplacement de connexion (213), dans laquelle les X colonnes et les Y lignes forment une zone rectangulaire (R) et l'emplacement de connexion (213) est disposé au moins partiellement dans la zone rectangulaire (R),
**caractérisé en ce que** l'emplacement de connexion (213) est disposé sur le côté du substrat de commande (21) faisant face au matériau d'affichage non volatile,

2. L'appareil d'affichage non volatile (2) selon la revendication 1, dans lequel l'emplacement de connexion (213) est disposé sur un côté, un coin, ou une partie intérieure de la zone rectangulaire (R).

3. L'appareil d'affichage non volatile (2) selon l'une quelconque des revendications précédentes, dans lequel le profil de la zone de distribution des électrodes de pixels (211) est polygonal concave.

4. L'appareil d'affichage non volatile (2) selon la revendication 1, dans lequel le substrat supérieur est un polygone convexe.

5. L'appareil d'affichage non volatile (2) selon la revendication 1, comprenant de surcroît:
un élément conducteur (26) connecté à l'emplacement de connexion (213) et à la couche d'électrode commune (25).

6. L'appareil d'affichage non volatile (2) selon la revendication 5, dans lequel l'élément conducteur (26) est un séparateur conducteur, un gel conducteur, une bande adhésive conductrice, ou un fil conducteur.

7. L'appareil d'affichage non volatile (2) selon l'une quelconque des revendications précédentes, comprenant en outre:
un cadre (28) couvrant la périphérie dus substrat de commande (21) et ayant une ouverture, dans lequel la zone rectangulaire (R) dispose d'une surface d'affichage correspondante et au moins une partie de la surface d'affichage est exposée de l'ouverture.

8. L'appareil d'affichage non volatile (2) selon la revendication 7, dans lequel, dans lequel une partie du cadre (28) recouvre au moins une partie de l'emplacement de connexion (213).

9. L'appareil d'affichage non volatile (2) selon la revendication 7, dans lequel la surface d'affichage dispose d'une zone d'affichage non effective (N2) et au moins une partie de l'emplacement d'affichage (213) est disposé sur la zone d'affichage non effective (N2).

10. L'appareil d'affichage non volatile (2) selon l'une quelconque des revendications précédentes, dans lequel la zone rectangulaire (R) contient en correspondance une pluralité de pixels et le nombre de pixels est inférieur au produit de X par Y.
